(19) Europäisches Patentamt
European Patent Office
Office européen des brevets

(11) **EP 4 651 571 A1**

(12) **EUROPEAN PATENT APPLICATION**
published in accordance with Art. 153(4) EPC

(43) Date of publication:
**19.11.2025 Bulletin 2025/47**

(21) Application number: **23915355.4**

(22) Date of filing: **12.01.2023**

(51) International Patent Classification (IPC):
***H04W 52/02*** (2009.01)

(52) Cooperative Patent Classification (CPC):
**H04W 52/02**

(86) International application number:
**PCT/CN2023/071972**

(87) International publication number:
**WO 2024/148585 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GUO, Shengxiang
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **SYNCHRONIZATION METHOD AND APPARATUS, AND COMPUTER STORAGE MEDIUM**

(57) The present disclosure relates to a synchronization method and apparatus, and a computer storage medium. The method comprises: a terminal device receiving a wake-up message sent by a network device, wherein the wake-up message can comprise synchronization information, and the synchronization information can be used for instructing the terminal device to perform synchronization. Thus, a terminal device can acquire synchronization information in a wake-up message, and perform synchronization with a network device on the basis of the synchronization information, such that the duration of synchronization between the terminal device and the network device can be reduced.

The terminal receives a wake-up message sent by a network device ⸺ S201

Fig. 2

## Description

## FIELD

The present disclosure relates to a field of communication technologies, in particular to a synchronization method, a device and a computer storage medium

## BACKGROUND

In a wireless communication system, in order to reduce the power consumption of a terminal, the 3rd generation partnership project (3GPP) introduces a power-saving signal, such as a wake-up Signaling (WUS). The WUS signal is a detection signal with low power consumption. When the terminal detects the WUS signal, it may monitor a physical downlink control channel (PDCCH), and when the terminal does not detect the WUS, it may skip the monitoring of the PDCCH.

In the related art, after receiving the WUS signal, the terminal needs to re-synchronize with a network device by receiving a synchronization signal and a physical downlink broadcast channel block (SSB) in order to monitor the PDCCH, which requires a long synchronization time.

## SUMMARY

In order to overcome the above problems in the related art, the present disclosure provides a synchronization method, a device and a computer storage medium.

According to a first aspect of embodiments of the present disclosure, there is provided a synchronization method, which is performed by a terminal, and includes:

receiving a wake-up message sent by a network device, in which the wake-up message includes synchronization information, and the synchronization information is configured to instruct the terminal to perform synchronization.

In some embodiments, the synchronization information includes at least one of:

first information for determining a cell identifier; and
second information for determining a cell group identifier.

In some embodiments, the synchronization information is information generated based on a synchronization sequence, and the synchronization sequence includes any one of an M sequence, a gold sequence and a ZC sequence.

In some embodiments, the synchronization information includes a preset synchronization bit sequence for instructing the terminal to synchronize with the network device. The preset synchronization bit sequence is a sequence generated according to a preset modulation mode, and the preset modulation mode includes a multi-carrier on-off keying (MC-OOK) modulation mode or an amplitude shift keying (ASK) modulation mode.

In some embodiments, receiving the wake-up message sent by the network device includes:

receiving the wake-up message sent by the network device through a first time domain resource set; and
the method further comprises:
acquiring the synchronization information in the wake-up message through a first time domain resource subset in the first time domain resource set, in which a numeric count of resources in the first time domain resource subset is less than or equal to a numeric count of resources in the first time domain resource set.

In some embodiments, the wake-up message further includes data information, and the method further includes:
acquiring the data information through a second time domain resource subset in the first time domain resource set, in which the second time domain resource subset is different from the first time domain resource subset, and a sum of a numeric count of resources in the second time domain resource subset and the numeric count of resources in the first time domain resource subset is less than or equal to the numeric count of resources in the first time domain resource set.

In some embodiments, receiving the wake-up message sent by the network device includes:

receiving the wake-up message sent by the network device through a first frequency domain resource set; and
the method further includes:
acquiring the synchronization information in the wake-up message through a first frequency domain resource subset in the first frequency domain resource set, in which a numeric count of resources in the first frequency domain resource subset is less than or equal to a numeric count of resources in the first frequency domain resource set.

In some embodiments, the wake-up message also includes data information, and the method further includes:
acquiring the data information through a second frequency domain resource subset in the first frequency domain resource set, in which the second frequency domain resource subset is different from the first frequency domain resource subset, and a numeric count of resources in the second frequency domain resource subset is less than or equal to the numeric count of resources in the first frequency domain resource set.

In some embodiments, the synchronization information is carried in a synchronization part of the wake-up message.

In some embodiments, the wake-up message also includes data information, and the data information is carried in a data part of the wake-up message.

In some embodiments, the method further includes:

synchronizing with the network device according to the wake-up message; or
synchronizing with the network device according to the wake-up message and a synchronization signal, in which the synchronization signal includes at least one of a primary synchronization signal (PSS), a secondary synchronization signal (SSS) and a resynchronization signal (RSS).

In some embodiments, the method further includes:
receiving the wake-up message and the synchronization signal according to a first time interval, and the first time interval includes any one of:

a time interval between an initial symbol of the wake-up message and an initial symbol of the synchronization signal;
a time interval between the initial symbol of the wake-up message and a final symbol of the synchronization signal;
a time interval between a final symbol of the wake-up message and the initial symbol of the synchronization signal; and
a time interval between the final symbol of the wake-up message and the final symbol of the synchronization signal.

In some embodiments, the method further includes:
receiving the wake-up message and the synchronization signal within one time period, and the time period includes any one of:

at least one symbol;
at least one time slot;
at least one subframe; and
at least one radio frame.

In some embodiments, receiving the wake-up message sent by the network device includes:
receiving the wake-up message sent by the network device according to a first time domain pattern, and the first time domain pattern includes any one of:

a start symbol and a time domain length corresponding to the wake-up message;
a start symbol and an end symbol corresponding to the wake-up message;
a start symbol, a time domain length and a time domain period corresponding to the wake-up message; and

a start symbol, an end symbol and a time domain period corresponding to the wake-up message.

According to a second aspect of embodiments of the present disclosure, there is provided a synchronization method, which is performed by a network device, and includes:
sending a wake-up message, in which the wake-up message includes synchronization information, and the synchronization information is configured to instruct a terminal to perform synchronization.

In some embodiments, the synchronization information includes at least one of:

first information for determining a cell identifier; and
second information for determining a cell group identifier.

In some embodiments, the synchronization information is information generated based on a synchronization sequence, and the synchronization sequence includes any one of an M sequence, a gold sequence and a ZC sequence.

In some embodiments, the synchronization information includes a preset synchronization bit sequence for instructing the terminal to perform synchronization. The preset synchronization bit sequence is a sequence generated according to a preset modulation mode, and the preset modulation mode includes a multi-carrier on-off keying (MC-OOK) modulation mode or an amplitude shift keying (ASK) modulation mode.

In some embodiments, sending the wake-up message includes:
sending the wake-up message through a first time domain resource set, in which the first time domain resource set includes a first time domain resource subset for carrying the synchronization information, and a numeric count of resources in the first time domain resource subset is less than or equal to a numeric count of resources in the first time domain resource set.

In some embodiments, the wake-up message further includes data information, and the first time domain resource set further includes a second time domain resource subset for carrying the data information. The second time domain resource subset is different from the first time domain resource subset, and a sum of a numeric count of resources in the second time domain resource subset and the numeric count of resources in the first time domain resource subset is less than or equal to the numeric count of resources in the first time domain resource set.

In some embodiments, sending the wake-up message includes:
sending the wake-up message through a first frequency domain resource set, in which the first frequency domain resource set includes a first frequency domain resource subset for carrying the synchronization information, and a numeric count of resources in the first frequency domain resource subset is less than or equal to a numeric count of resources in the first frequency domain resource set.

In some embodiments, the wake-up message further includes data information, and the first frequency domain resource set further includes a second frequency domain resource subset for carrying the data information. A numeric count of resources in the second frequency domain resource subset is less than or equal to the numeric count of resources in the first frequency domain resource set.

In some embodiments, sending the wake-up message includes:

sending the wake-up message and a synchronization signal according to a first time interval, in which the first time interval includes any one of:

a time interval between an initial symbol of the wake-up message and an initial symbol of the synchronization signal;

a time interval between the initial symbol of the wake-up message and a final symbol of the synchronization signal;

a time interval between a final symbol of the wake-up message and the initial symbol of the synchronization signal; and

a time interval between the final symbol of the wake-up message and the final symbol of the synchronization signal.

In some embodiments, sending the wake-up message includes:

sending the wake-up message and the synchronization signal within one time period, in which the time period includes any one of:

at least one symbol;
at least one time slot;
at least one subframe; and
at least one radio frame.

In some embodiments, sending the wake-up message includes:

sending the wake-up message according to a first time domain pattern, in which the first time domain pattern includes any one of:

a start symbol and a time domain length corresponding to the wake-up message;

a start symbol and an end symbol corresponding to the wake-up message;

a start symbol, a time domain length and a time domain period corresponding to the wake-up message; and

a start symbol, an end symbol and a time domain period corresponding to the wake-up message.

According to a third aspect of embodiments of the present disclosure, there is provided a terminal, which includes:

a receiving module configured to receive a wake-up message sent by a network device, in which the wake-up message includes synchronization information, and the synchronization information is configured to instruct the terminal to perform synchronization.

According to a fourth aspect of embodiments of the present disclosure, there is provided a network device, which includes:

a sending module configured to send a wake-up message, in which the wake-up message includes synchronization information, and the synchronization information is configured to instruct a terminal to perform synchronization.

According to a fifth aspect of embodiments of the present disclosure, there is provided a communication device, which includes:

a processor; and
a memory configured to store instructions executable by the processor.

The processor is configured to perform the steps of the synchronization method provided in the first aspect of the present disclosure.

According to a sixth aspect of embodiments of the present disclosure, there is provided a communication device, which includes:

a processor; and
a memory configured to store instructions executable by the processor.

The processor is configured to perform the steps of the synchronization method provided in the second aspect of the present disclosure.

According to a seventh aspect of embodiments of the present disclosure, there is provided a computer-readable storage medium, on which computer program instructions are stored, which, when executed by a processor, realize the steps of the synchronization method provided in the first aspect of the present disclosure.

According to an eighth aspect of embodiments of the present disclosure, there is provided a computer-readable storage medium, on which computer program instructions are stored, which, when executed by a processor, realize the steps of the synchronization method provided in the second aspect of the present disclosure.

According to a ninth aspect of embodiments of the present disclosure, there is provided a communication system, which includes:

a terminal configured to perform the synchronization method provided in the first aspect of the present disclosure; and

a network device configured to perform the synchronization method provided in the second aspect of the present disclosure.

The technical scheme provided by the embodiments of the present disclosure may include the following beneficial effects: the terminal receives the wake-up message sent by the network device, and the wake-up message may include the synchronization information. In this way, the terminal may acquire the synchronization information in the wake-up message and synchronize with the network device based on the synchronization information, thereby reducing the time for synchronization between the terminal and the network device.

It is to be understood that both the foregoing general description and the following detailed description are illustrative and explanatory only, and are not restrictive of the present disclosure.

## BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.

Fig. 1 is a schematic diagram of a communication system according to an illustrative embodiment.
Fig. 2 is a flowchart of a synchronization method according to an illustrative embodiment.
Fig. 3 is a flowchart of a synchronization method according to an illustrative embodiment.
Fig. 4 is a flowchart of a synchronization method according to an illustrative embodiment.
Fig. 5 is a flowchart of a synchronization method according to an illustrative embodiment.
Fig. 6 is a flowchart of a synchronization method according to an illustrative embodiment.
Fig. 7 is a flowchart of a synchronization method according to an illustrative embodiment.
Fig. 8 is a timing diagram of a wake-up message and a synchronization signal according to an illustrative embodiment.
Fig. 9 is another timing diagram of a wake-up message and a synchronization signal according to an illustrative embodiment.
Fig. 10 is a schematic diagram of a wake-up message according to an illustrative embodiment.
Fig. 11 is a flowchart of a synchronization method according to an illustrative embodiment.
Fig. 12 is a flowchart of a synchronization method according to an illustrative embodiment.
Fig. 13 is a flowchart of a synchronization method according to an illustrative embodiment.
Fig. 14 is a flowchart of a synchronization method according to an illustrative embodiment.
Fig. 15 is a flowchart of a synchronization method according to an illustrative embodiment.
Fig. 16 is a flowchart of a synchronization method according to an illustrative embodiment.
Fig. 17 is a block diagram of a terminal according to an illustrative embodiment.
Fig. 18 is a block diagram of a terminal according to an illustrative embodiment.
Fig. 19 is a block diagram of a network device according to an illustrative embodiment.
Fig. 20 is a block diagram of a communication device according to an illustrative embodiment.

## DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of devices and methods consistent with some aspects of the present disclosure as detailed in the appended claims.

It should be noted that all actions of acquiring signals, information or data in the present disclosure are carried out under the premise of complying with corresponding data protection laws and policies of local countries and acquiring authorization from corresponding device owners.

In the description of the present disclosure, terms such as "first" and "second" are used to distinguish similar objects, without necessarily being understood as a specific order or precedence. In addition, in the description with reference to the drawings, the same reference numerals in different drawings indicate the same elements, unless otherwise stated.

In the description of the present disclosure, unless otherwise specified, "a plurality of/multiple" means two or more, and other quantifiers are similar. Terms such as "at least one item", "one item or more items" or similar expressions refer to any combination of these items, including any combination of single item or multiple items. For example, at least one item may represent any number. For another example, one or more of a, b and c may be expressed as: a, b, c, a-b, a-c, b-c, or a-b-c, where a, b and c may be singular or plural. The term "and/or" describes an association relationship of associated objects, which means that there may be three kinds of relationships. For example, A and/or B may mean that A exists alone, both A and B exist, and B exists alone, where A and B may be singular or plural. The character "/" indicates that former and latter associated objects have an OR relationship. The singular forms such as "a", "an", "the" and "said" are also intended to include the plural forms, unless the context clearly indicates other meaning.

Although the operations or steps are described in a specific order in the embodiments or drawings of the present disclosure, it should not be construed as requiring that these operations or steps be performed in the specific order or serial order shown, or that all the operations or steps shown be performed to achieve the desired results. In the embodiments of the present disclosure, these operations or steps may be performed in any order without contradiction, or these operations or steps may also be performed in parallel, or some of these operations or steps may be performed, or the operations or steps in multiple embodiments or drawings may also be arbitrarily combined, which is not limited by the present disclosure.

First, an implementation environment of the embodiments of the present disclosure will be introduced in the following.

The technical scheme of the embodiments of the present disclosure may be applied to various communication systems. The communication system may include one or more of the 4th generation (4G) communication system, the 5th generation (5G) communication system, and other future wireless communication systems (such as 6G). The communication system may also include a public land mobile network (PLMN), a device-to-device (D2D) communication system, a machine-to-machine (M2M) communication system, an Internet of Things (IoT) communication system, a vehicle-to-everything (V2X) communication system or other communication systems.

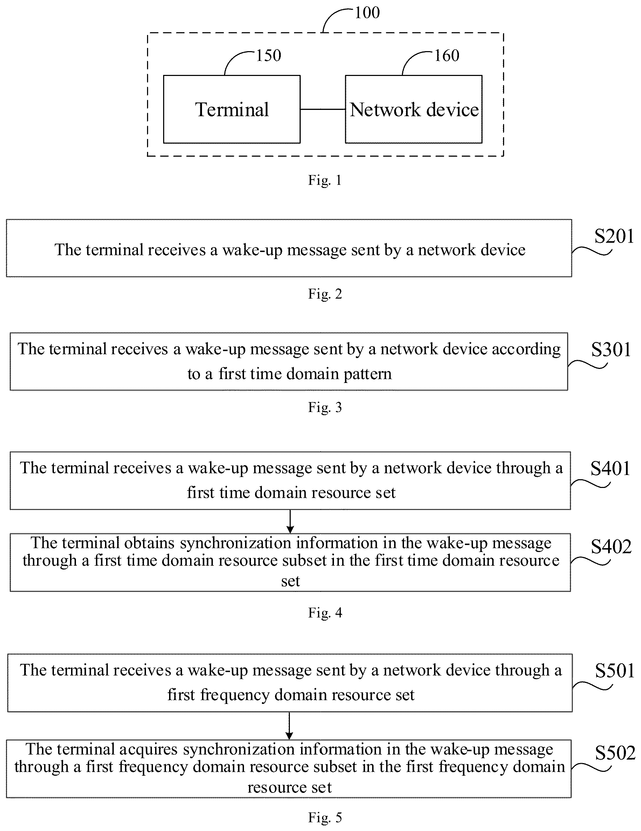

Fig. 1 is a schematic diagram of a communication system 100 according to an illustrative embodiment. As shown in Fig. 1, the communication system 100 may include a terminal 150 and a network device 160. The communication system may be used to support a 4G network access technology, such as a long term evolution (LTE) access technology, or 5G network access technology, such as a new radio access technology (New RAT), or other future wireless communication technologies. It should be noted that in this communication system, one or more network devices and one or more terminals may be arranged, and the number of the network devices and the number of the terminals in the communication system shown in Fig. 1 are only an example of adaptability, which is not limited by the present disclosure.

The network device in Fig. 1 may be used to support access of the terminal. For example, the network device may be an evolved node B (eNB or eNodeB) in an LTE; the network device may also be a next generation node B (gNB or gNodeB) in a 5G network; the network device may also be a NG-radio access network (NG-RAN) device in the 5G network; and the network device may also be a base station, a broadband network gateway (BNG), a convergence switch or a non-3GPP access device in a future evolved public land mobile network (PLMN). Optionally, the network device in the embodiments of the present disclosure may include various forms of base stations, such as macro base stations, micro base stations (also called small stations), relay stations, access points, 5G base stations or future base stations, satellites, transmitting and receiving points (TRPs), transmitting points (TPs), mobile switching centers, device-to-device (D2D), machine-to-machine (M2M), Internet of Things (IoT), vehicle-to-everything (V2X) or other devices that assume the function of a base station in a communication system, etc., which is not limited by the embodiments of the present disclosure. For convenience of description, in all embodiments of the present disclosure, devices that provide wireless communication functions for terminals are collectively referred to as network devices or base stations.

The terminal in Fig. 1 may be an electronic device that provides voice or data connectivity. For example, the terminal may also be called user equipment (UE), a subscriber unit, a mobile station, a station, a terminal device, etc. For example, the terminal may include a smart phone, a smart wearable device, a smart speaker, a smart tablet, a wireless modem, a wireless local loop (WLL) station, a personal digital assistant (PDA), a customer premise equipment (CPE), and the like. With the development of wireless communication technology, devices that may access the communication system, communicate with network devices of the communication system, communicate with other objects through the communication system, or two or more devices that may communicate directly may all be terminals in the embodiments of the present disclosure, such as terminals and vehicles in intelligent transportation, household equipment in smart homes, power meter reading instruments in smart grids, voltage monitoring instruments, environmental monitoring instruments, video monitoring instruments in intelligent security networks, cash registers, etc. In the embodiments of the present disclosure, the terminal may communicate with the network device. Multiple terminals may also communicate with each other. The terminal may be static or mobile, which is not limited by the present disclosure.

Fig. 2 is a flowchart of a synchronization method according to an illustrative embodiment. The method may be performed by the terminal in the above communication system. As shown in Fig. 2, the method may include the following steps

In step S201, the terminal receives a wake-up message sent by a network device.

In some embodiment, the wake-up message may include synchronization information, and the terminal may acquire the synchronization information in the wake-up message.

In other embodiments, the wake-up message may include synchronization information and data information, and the terminal may acquire the synchronization information and the data information in the wake-up message.

The wake-up message may also be called a wake-up signal (WUS). For example, the wake-up message may be a low power-wake up signal (LP-WUS). The terminal may receive the LP-WUS using a separate receiver, which may be called a low power-wake up radio (LP-WUR). The terminal may also include a main radio (MR), and the terminal may use the main radio to receive downlink signals and/or send uplink signals.

In some embodiments, when the terminal does not receive the wake-up signal, or the received wake-up signal does not indicate to wake up the terminal, the terminal may keep the main radio in a sleep state. The sleep state of the master radio may include at least one of ultra-deep sleep, deep sleep, light sleep or micro sleep.

In other embodiments, when the terminal receives the wake-up signal and the wake-up signal indicates to wake up the terminal, the terminal may turn on the main radio and communicate with the network device through the main radio, for example, receiving downlink signals and/or sending uplink signals.

In order to communicate with the network device through the main radio, the terminal needs to perform synchronization first. For example, the terminal may perform downlink synchronization with the network device through a synchronization signal and physical downlink broadcast channel block (SS&PBCH, SSB for short). The SSB may at least include a primary synchronization signal (PSS), a secondary synchronization signal (SSS) and a physical downlink broadcast channel (PBCH).

In some embodiments, the synchronization information may be used to instruct the terminal to perform synchronization, and the terminal may synchronize with the network device according to the synchronization information.

In an implementation, the terminal may complete synchronization according to the synchronization information in the wake-up message.

For example, the synchronization information may carry all the information required by the terminal for synchronization, and the terminal may periodically receive the synchronization information in the wake-up message, and complete synchronization with the network device according to the synchronization information in multiple periods.

In another implementation, the terminal may complete synchronization according to a synchronization signal (such as a PSS and/or an SSS) and the synchronization information in the wake-up message.

For example, the synchronization information in the wake-up message may carry part of information (such as primary synchronization information or secondary synchronization information) required by the terminal for synchronization, and the synchronization signal may carry other parts of information required by the terminal for synchronization. The terminal may periodically receive the wake-up message and the synchronization signal, and complete synchronization with the network device according to the wake-up messages and the synchronization signals in multiple cycles.

By adopting the above method, the terminal receives the wake-up message sent by the network device, and the wake-up message may include the synchronization information. In this way, the terminal may obtain the synchronization information in the wake-up message and synchronize with the network device based on the synchronization information, thereby reducing the time for synchronization between the terminal and the network device.

In some embodiments of the present disclosure, the synchronization information may include at least one of:

first information for determining a cell identifier, in which the cell identifier may be used to indicate a unique cell; and

second information for determining a cell group identifier, in which the cell group identifier may be used to indicate a cell group composed of a plurality of cells.

The first information may include one or more of a complete cell identifier, a physical layer cell identifier group NID1 and an intra-group identifier NID2.

In an implementation, the first information may include a complete cell identifier. For example, a value of the cell identifier may be any value greater than or equal to 0 and less than or equal to 1007.

In another implementation, the first information may include one or more of the physical layer cell identifier group NID1 and the intra-group identifier NID2. A value of the intra-group identifier NID2 may be any value in 0/1/2, and a value of the physical layer cell identifier group NID1 may be any value greater than or equal to 0 and less than or equal to 335. In this way, the terminal may determine the cell identifier according to the physical layer cell identifier group NID1 and the intra-group identifier NID2. For example, the cell identifier may be calculated by a following formula (1):

$$N_{ID}^{cell} = 3N_{ID}^{(1)} + N_{ID}^{(2)} \cdots\cdots (1)$$

$N_{ID}^{cell}$ represents the cell identifier, $N_{ID}^{(1)}$ represents the physical layer cell identifier group NID1, and $N_{ID}^{(2)}$ identifies the intra-group identifier NID2.

In another implementation, the first information may include a physical layer cell identifier group NID1, and the terminal may also obtain an intra-group identifier NID2 from the synchronization signal, so that the terminal may determine the cell identifier according to the physical layer cell identifier group NID1 obtained from the wake-up message and the intra-group identifier NID2 obtained from the synchronization signal.

In yet another implementation, the first information may include an intra-group identifier NID2, and the terminal may also obtain a physical layer cell identifier group NID1 from the synchronization signal, so that the terminal may determine the cell identifier according to the intra-group identifier NID2 obtained from the wake-up message and the physical layer cell identifier group NID1 obtained from the synchronization signal.

The second information may include the complete cell group identifier or part of information in the cell group identifier.

In this way, the terminal may determine the cell identifier and/or the cell group identifier through the synchronization information.

In some embodiments, the synchronization information may be information generated based on a synchronization sequence, and the synchronization sequence may be a pseudo-random sequence. The synchronization sequence may include any one of an M sequence, a gold sequence and a ZC sequence.

The M sequence, also known as the longest linear shift register sequence, is a pseudo-random sequence, and may be generated by a feedback shift register, and a feedback connection of the register is determined by a primitive polynomial that generates the m sequence.

The gold sequence may be formed by performing a modulo-2 addition on a preferred pair of two m sequences with the same code length and code clock rate, and a new gold sequence may be obtained by changing the relative shift of the two m sequences.

The ZC sequence may be called the Zadoff-Chu sequence, and is an Euler complex sequence. That is, the ZC sequence is not a sequence of a point in an abscissa or an ordinate, nor a sequence of any point in a plane coordinate, but is a sequence of points in a complex plane, and each point corresponds to a pair of in-phase orthogonal data. An amplitude of a signal of the ZC sequence is constant.

In other embodiments of the present disclosure, the synchronization information may include a preset synchronization bit sequence for instructing the terminal to synchronize with the network device.

The preset synchronization bit sequence may be any bit sequence set in advance, and a length of the preset synchronization bit sequence may be any value set in advance, such as 16 bits, 32 bits, 64 bits, 128 bits or 256 bits. For example, the preset synchronization bit sequence may be a following 32-bit sequence: [10100100101110110001011100111000].

In an implementation, the preset synchronization bit sequence may be a sequence generated according to a preset modulation mode, and the preset modulation mode includes a multi-carrier on-off keying (MC-OOK) modulation mode or an amplitude shift keying (ASK) modulation mode.

When the preset modulation mode is the MC-OOK modulation mode, each bit of the preset synchronization bit sequence may occupy at least one symbol. When the preset modulation mode is the ASK modulation mode, multiple bits of the preset synchronization bit sequence may occupy at least one symbol, for example, every four bits occupy one symbol.

In another implementation, the preset synchronization bit sequence may be a sequence generated according to a preset modulation mode, and the preset modulation mode includes a multi-carrier on-off keying (MC-OOK) modulation mode or an amplitude shift keying (ASK) modulation mode.

When the preset modulation mode is the MC-OOK modulation mode, one time domain symbol is mapped to at most one bit of the preset synchronization bit sequence, for example, the synchronization sequence [1110111] occupies seven time domain symbols. When the preset modulation mode is the ASK modulation mode, one time domain symbol is mapped to at least two bits of the preset synchronization bit sequence, for example, every two bits occupy one symbol.

In the above embodiment, further, when the preset modulation mode is the MC-OOK modulation mode, one bit of the preset synchronization bit sequence may be mapped to multiple time domain symbols. When the preset modulation mode is the ASK modulation mode, at least two bits of the preset synchronization bit sequence may be mapped to multiple time domain symbols. For example, when the synchronization bit sequence is [1011], 10 is mapped to a first time domain symbol and a second time domain symbol, and 11 is mapped to a third time domain symbol and a fourth time domain symbol.

In this way, the terminal acquires the preset synchronization bit sequence through the wake-up message, and performs synchronization according to the preset synchronization bit sequence.

Fig. 3 is a flowchart of a synchronization method according to an illustrative embodiment. As shown in Fig. 3, the method may include following steps.

In step S301, the terminal receives a wake-up message sent by a network device according to a first time domain pattern.

In some embodiments, the wake-up message may include synchronization information. The terminal may acquire the synchronization information in the wake-up message.

In other embodiments, the wake-up message may include synchronization information and data information.

In some embodiments, the first time domain pattern may include a start symbol and a time domain length corresponding to the wake-up message, and the terminal may receive the wake-up message according to the start symbol and the time domain length. For example, the terminal may receive the wake-up message within a first time domain resource set of the time domain length starting from the start symbol. The start symbol may be any integer greater than or equal to 0, such as 0, 2, 5, 6, 7 or 8. The time domain length may be any integer greater than 0, such as 14, 28, 42 or 56.

In other embodiments, the first time domain pattern may include a start symbol, a time domain length and a time domain period corresponding to the wake-up message, and the terminal may periodically receive the wake-up message according to the start symbol, the time domain length and the time domain period in the first time domain pattern. The start symbol may be any integer greater than or equal to 0, such as 0, 2, 5, 6, 7 or 8. The time domain length may be any integer greater than 0, such as 14, 28, 42 or 56. The time domain period is also any integer greater than or equal to 0, for example, any integer greater than or equal to 0 and less than or equal to 20.

For example, the terminal may calculate a start symbol position of each period according to a following formula (2):

$$S_j = i + k * j \quad (2)$$

$S_j$ represents a start symbol position of a j-th period, i represents the start symbol in the first time-domain pattern, k represents the time-domain length in the first time-domain pattern, and j represents the time-domain period in the first time-domain pattern. In an implementation, a value of i may be 0, 2, 5, 6, 7 or 8, a value of k may be 14, 28, 42, 56, and a value of j may be any integer greater than or equal to 0 and less than or equal to 20.

In other embodiments, the first time domain pattern may include a start symbol and an end symbol corresponding to the wake-up message, and the terminal may receive the wake-up message according to the start symbol and the end symbol. For example, the terminal may receive the wake-up message in a first time domain resource set between the start symbol and the end symbol. Both the start symbol and the end symbol may be any integer greater than or equal to 0, and the start symbol is less than or equal to the end symbol. For example, both the start symbol and the end symbol may be 0. For another example, the start symbol may be 0 and the end symbol may be 6. For another example, the start symbol may be 2 and the end symbol may be 14.

In still other embodiments, the first time domain pattern may include a start symbol, an end symbol and a time domain period corresponding to the wake-up message, and the terminal may periodically receive the wake-up message according to the start symbol, the end symbol and the time domain period in the first time domain pattern.

It should be noted that the first time domain pattern may also be called a first time domain plot.

Similarly, the synchronization information may be used to instruct the terminal to perform synchronization, and the terminal may synchronize with the network device according to the synchronization information.

In this way, the terminal may receive the wake-up message sent by the network device according to the first time domain pattern.

Fig. 4 is a flowchart of a synchronization method according to an illustrative embodiment. As shown in Fig. 4, the method may include the following steps

In step S401, the terminal receives a wake-up message sent by a network device through a first time domain resource set.

In some embodiments, the first time domain resource set may include N1 time domain symbols. For example, N1 may be any positive integer. For example, N1 may be 4, 5, 7 or 14.

In other embodiments, the first time domain resource set may include N2 time slots. For example, N2 may be any positive integer. For example, N2 may be 1, 2 or 4.

In step S402, the terminal obtains synchronization information in the wake-up message through a first time domain resource subset in the first time domain resource set.

A numeric count of resources in the first time domain resource subset is less than or equal to a numeric count of resources in the first time domain resource set.

In some embodiments, the resources in the first time domain resource set may be N1 time domain symbols, and the resources in the first time domain resource subset may be N3 time domain symbols, in which N3 is less than or equal to N1. For example, N1 and N3 are both 5. For another example, N1 is 5 and N3 is 4.

In other embodiments, the resources in the first time domain resource set may be N2 time slots, and the resources in the first time domain resource subset may be N4 time slots, in which N4 is less than or equal to N2. For example, N2 and N4 are both 4. For another example, N2 is 4 and N4 is 1.

In this way, the terminal may receive the wake-up message through the first time domain resource set and acquire the synchronization information in the wake-up message through the first time domain resource subset in the first time domain resource set.

In some embodiments of the present disclosure, the wake-up message may further include data information, and the method may further include:
acquiring the data information in the wake-up message through a second time domain resource subset in the first time domain resource set.

The second time domain resource subset is different from the first time domain resource subset, and a sum of a numeric count of resources in the second time domain resource subset and the numeric count of resources in the first time domain resource subset is less than or equal to the numeric count of resources in the first time domain resource set.

In some embodiments, the resources in the first time domain resource set may be N1 time domain symbols, the resources in the first time domain resource subset may be N3 time domain symbols, and the resources in the second time domain resource subset may be N5 time domain symbols, in which the sum of N3 and N5 may be less than or equal to N1. For example, N1 is 5, N3 is 2, and N5 is 3.

In other embodiments, the resources in the first time domain resource set may be N2 time slots, the resources in the first time domain resource subset may be N4 time slots, and the resources in the second time domain resource subset may be N6 time slots, in which the sum of N4 and N6 is less than or equal to N2. For example, N2 is 4, N4 is 1 and N6 is 3.

In this way, the terminal may receive the wake-up message through the first time domain resource set and acquire the data information in the wake-up message through the second time domain resource subset in the first time domain resource set.

Fig. 5 is a flowchart of a synchronization method according to an illustrative embodiment. As shown in Fig. 5, the method may include the following steps

In step S501, the terminal receives a wake-up message sent by a network device through a first frequency domain resource set.

In some embodiments, the first frequency domain resource set may include M1 resource blocks (RBs). For example, M1 may be any positive integer. For example, M1 may be 2, 4, 6, 8, 10, 12, 16, 20, 32, 40 or 64.

In step S502, the terminal acquires synchronization information in the wake-up message through a first frequency domain resource subset in the first frequency domain resource set.

A numeric count of resources in the first frequency domain resource subset is less than or equal to a numeric count of resources in the first frequency domain resource set.

For example, the resources in the first frequency domain resource set may be M1 RBs, and the resources in the first frequency domain resource subset may be M2 RBs, in which M2 is less than or equal to M1. For example, M1 and M2 are both 16. For another example, M1 is 20 and M2 is 12.

In this way, the terminal may receive the wake-up message through the first frequency domain resource set and acquire the synchronization information in the wake-up message through the first frequency domain resource subset in the first frequency domain resource set.

In some embodiments of the present disclosure, the wake-up message may further include data information, and the method may further include:
acquiring the data information in the wake-up message through a second frequency domain resource subset in the first frequency domain resource set.

The second frequency domain resource subset is different from the first frequency domain resource subset, and a numeric count of resources in the second frequency domain resource subset is less than or equal to the numeric count of resources in the first frequency domain resource set.

For example, the resources in the first frequency domain resource set may be M1 RBs, and the resources in the second frequency domain resource subset may be M3 RBs, in which M3 is less than or equal to M1. For example, M1 is 20 and M3 is 12.

In this way, the terminal may receive the wake-up message through the first frequency domain resource set and acquire the data information in the wake-up message through the second frequency domain resource subset in the first frequency domain resource set.

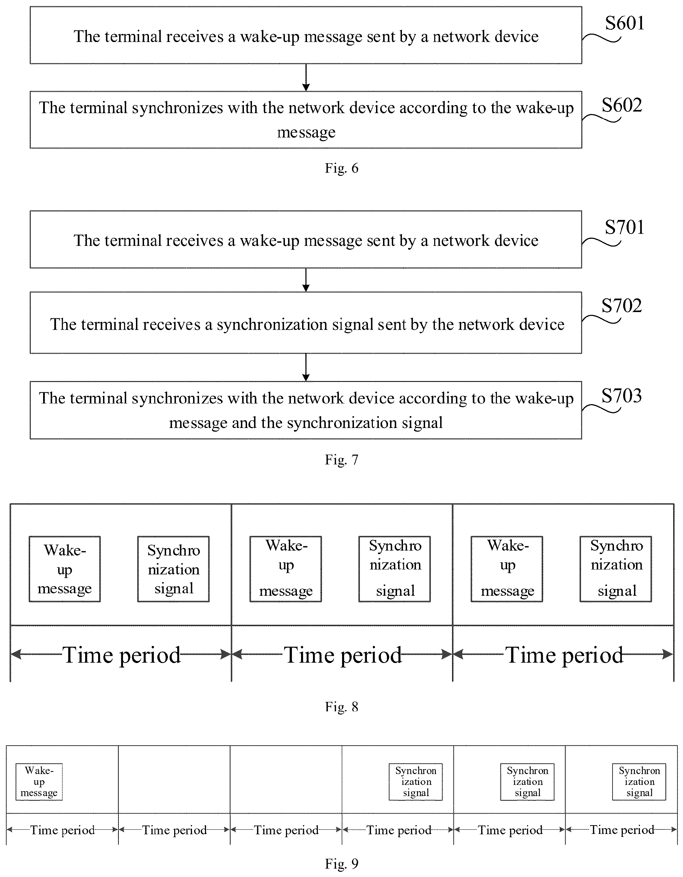

Fig. 6 is a flowchart of a synchronization method according to an illustrative embodiment. As shown in Fig. 6, the method may include the following steps.

In step S601, the terminal receives a wake-up message sent by a network device.

In step S602, the terminal synchronizes with the network device according to the wake-up message.

The wake-up message may include synchronization information, and the terminal may synchronize with the network device according to the synchronization information.

In some embodiments, the terminal may complete synchronization with the network device only based on the synchronization information.

It should be noted that this embodiment may be combined with the aforementioned embodiments or implementations of the present disclosure and various alternatives thereof, without contradiction, and the specific implementations of the above steps in this embodiment may also refer to the descriptions in the aforementioned embodiments of the present disclosure, which is not repeated here.

In this way, the terminal may synchronize with the network device according to the synchronization information in the wake-up message, thereby reducing the time for synchronization between the terminal and the network device.

Fig. 7 is a flowchart of a synchronization method according to an illustrative embodiment. As shown in Fig. 7, the method may include the following steps.

In step S701, the terminal receives a wake-up message sent by a network device.

The wake-up message may include synchronization information. The synchronization information may be used to instruct the terminal to perform synchronization.

In step S702, the terminal receives a synchronization signal sent by the network device.

In some embodiments, the synchronization signal may include at least one of a primary synchronization signal (PSS), a secondary synchronization signal (SSS) and a resynchronization signal (RSS).

In some embodiments, the synchronization signal may include an SSB.

In step S703, the terminal synchronizes with the network device according to the wake-up message and the synchronization signal.

For example, the terminal may complete synchronization with the network device according to the wake-up message and the synchronization signal.

Both the wake-up message and the synchronization signal may include synchronization information, and the synchronization information in the wake-up message and the synchronization information in the synchronization signal may be the same or different.

In some embodiments, the wake-up message may include first synchronization information, and the synchronization signal may include second synchronization information. The first synchronization information may be part of synchronization information required by the terminal for synchronization, and the second synchronization information may be another part of synchronization information required by the terminal for synchronization. The terminal may perform synchronization according to the first synchronization information in the wake-up message and the second synchronization information in the synchronization signal. For example, the terminal may complete synchronization according to the first synchronization information and the second synchronization information.

In some embodiments, the first synchronization information in the wake-up message may include at least one of a physical layer cell identifier group NID1 and an intra-group identifier NID2, and the second synchronization information in the synchronization signal may also include at least one of a physical layer cell identifier group NID1 and an intra-group identifier NID2.

It should be noted that the above synchronization signal may also be called a synchronization message.

It should also be noted that this embodiment may be combined with the aforementioned embodiments or implementations of the present disclosure and various alternatives thereof, without contradiction, and the specific implementations of the above steps in this embodiment may also refer to the descriptions in the aforementioned embodiments of the present disclosure, which is not repeated here.

In this way, the terminal may synchronize with the network device according to the wake-up message and the synchronization signal.

In some embodiments of the present disclosure, the terminal may receive the wake-up message and the synchronization signal according to a first time interval, and the first time interval may include any one of:

> a time interval between an initial symbol of the wake-up message and an initial symbol of the synchronization signal;
> a time interval between the initial symbol of the wake-up message and a final symbol of the synchronization signal;
> a time interval between a final symbol of the wake-up message and the initial symbol of the synchronization signal; and
> a time interval between the final symbol of the wake-up message and the final symbol of the synchronization signal.

The initial symbol of the wake-up message may be a first symbol of the wake-up message that the terminal receives, and the final symbol of the wake-up message may be a last symbol of the wake-up message that the terminal receives. Similarly, the initial symbol of the synchronization signal may be a first symbol of the synchronization signal that the terminal receives, and the final symbol of the synchronization signal may be a last symbol of the synchronization signal that the terminal receives.

In some embodiments, the first time interval may include L time units, and the time unit may be a symbol, a time slot, a subframe, a radio frame or a millisecond. For example, the first time interval may include any one of L1 symbols, L2 time slots, L3 subframes, L4 radio frames or L5 milliseconds, in which L1 may be any positive integer, and similarly, L2, L3, L4 and L5 may also be any positive integer.

In some embodiments, the first time interval may be a time agreed by the protocol, and both the terminal and the network device take the time agreed by the protocol as the first time interval.

In other embodiments, the first time interval may be pre-configured by the network device and sent to the terminal.

In some embodiments, a moment when the terminal receives the wake-up message and a moment when the terminal receives the synchronization signal may be separated by the first time interval.

In other embodiments of the present disclosure, the terminal may receive the wake-up message and the synchronization signal in the same time period, and the time period may include any one of:

> at least one symbol, for example, P1 symbols, in which P1 may be any positive integer;
> at least one time slot, for example, P2 time slots, in which P2 may also be any positive integer;
> at least one subframe, for example, P3 subframes, in which P3 may also be any positive integer; and
> at least one radio frame, for example, P4 radio frames, in which P4 may also be any positive integer.

In other embodiments, the time period may also be any time unit, such as P5 milliseconds, and P5 may also be any positive integer. For example, the time period may be 10 milliseconds or 20 milliseconds.

In some embodiments, the time period may be a period agreed by the protocol, and both the terminal and the network device take the period agreed by the protocol as the time period.

In other embodiments, the time period may be pre-configured by the network device and sent to the terminal.

It should be noted that in the same time period, the terminal may receive one wake-up message and one synchronization signal, or one wake-up message and a plurality of synchronization signals, or a plurality of wake-up messages and one synchronization signal, or a plurality of wake-up messages and a plurality of synchronization signals, which is not limited by the present disclosure.

Fig. 8 is a timing diagram of a wake-up message and a synchronization signal according to an illustrative embodiment. As shown in Fig. 8, the wake-up message and the synchronization signal may be in the same time period.

In some embodiments, the time period may be one time slot, the wake-up message may be carried in first 7 symbols of each time slot, and the synchronization signal may be carried in last 7 symbols of each time slot. In this way, the terminal may receive the wake-up message and the synchronization signal in the same time slot.

In other embodiments, the time period may include multiple time slots, the wake-up message may be carried in a first time slot, and the synchronization signal may be carried in a second time slot. In this way, the terminal may receive the wake-up message and the synchronization signal through a plurality of time slots.

Fig. 9 is another timing diagram of a wake-up message and a synchronization signal according to an illustrative embodiment. As shown in Fig. 9, the wake-up message and the synchronization signal may be in different time periods. For example, the wake-up message and the synchronization signal may be separated by a first time interval, so that a moment when the terminal receives the wake-up message and a moment when the terminal receives the synchronization signal may be separated by the first time interval. With regard to the first time interval, reference may be made to the descriptions in the previous embodiments, which is not repeated here.

In some embodiments, the wake-up message may include a synchronization part, and the synchronization information may be carried in the synchronization part of the wake-up message.

In other embodiments, the wake-up message may further include data information, and the data information is carried in a data part of the wake-up message.

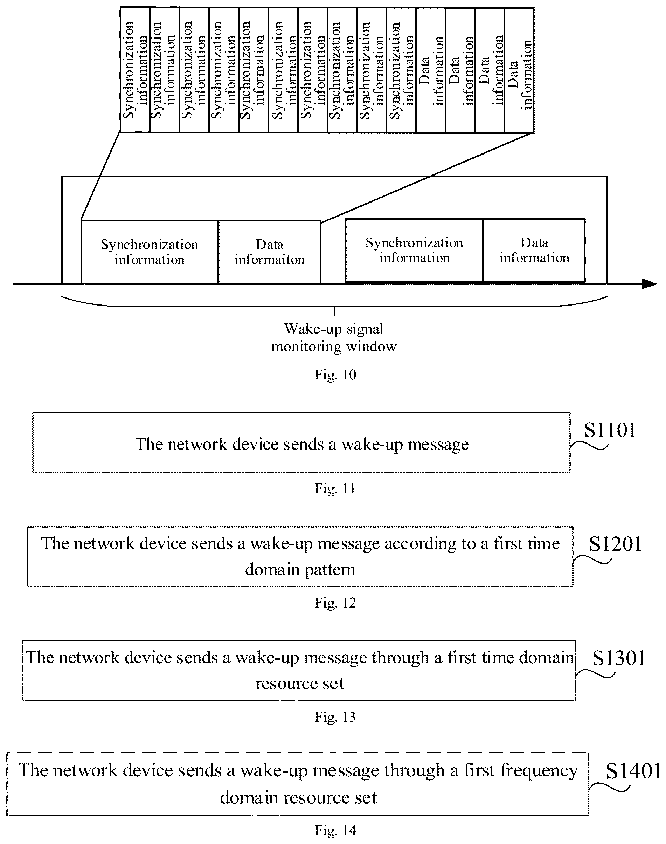

Fig. 10 is a schematic diagram of a wake-up message according to an illustrative embodiment. As shown in Fig. 10, the wake-up message may include a synchronization part and a data part, the synchronization part may include synchronization information and the data part may include data information.

In the schematic diagram of the wake-up message shown in Fig. 10, each wake-up signal monitoring window may include one or more wake-up signals, and each wake-up message may occupy 14 symbols, in which the synchronization part may occupy 10 symbols and the data part may occupy 4 symbols.

In this way, the terminal may acquire the synchronization information in the synchronization part through the wake-up message.

Fig. 11 is a flowchart of a synchronization method according to an illustrative embodiment. The method may be executed by the network device in the above communication system. As shown in Fig. 11, the method may include the following steps.

In step S1101, the network device sends a wake-up message.

In some embodiments, the wake-up message may include synchronization information. The network device may send the synchronization information to the terminal through the wake-up message.

In other embodiments, the wake-up message may include synchronization information and data information. The network device may send the synchronization information and the data information to the terminal through the wake-up message.

The wake-up message may also be called a wake-up signal (WUS). For the wake-up message and the specific way for the terminal to synchronize with the network device by using the synchronization information in the wake-up message, reference may be made to the descriptions in the previous embodiments of the present disclosure, which is not repeated here.

By adopting the method, the network device sends the wake-up message, and the wake-up message includes the synchronization information. In this way, the network device may send the synchronization information to the terminal through the wake-up message, thereby instructing the terminal to synchronize with the network device based on the synchronization information, which may reduce the time for synchronization between the terminal and the network device.

In some embodiments of the present disclosure, the synchronization information may include at least one of:

first information for determining a cell identifier, in which the cell identifier may be used to indicate a unique cell; and
second information for determining a cell group identifier, in which the cell group identifier may be used to indicate a cell group composed of a plurality of cells.

The first information may include one or more of a complete cell identifier, a physical layer cell identifier group NID1 and an intra-group identifier NID2.

The second information may include the complete cell group identifier or part of information in the cell group identifier.

In this way, the network device may instruct the terminal to determine the cell identifier and/or the cell group identifier through the synchronization information.

In some embodiments, the synchronization information may be information generated based on a synchronization sequence, and the synchronization sequence may be a pseudo-random sequence. The synchronization sequence may include any one of an M sequence, a gold sequence and a ZC sequence.

In other embodiments of the present disclosure, the synchronization information may include a preset synchronization bit sequence for instructing the terminal to synchronize with the network device.

The preset synchronization bit sequence may be a sequence generated according to a preset modulation mode, and the preset modulation mode includes a multi-carrier on-off keying (MC-OOK) modulation mode or an amplitude shift keying (ASK) modulation mode.

It should be noted that for the specific way of generating the preset synchronization bit sequence according to the MC-OOK modulation mode or the ASK modulation mode, reference may be made to the descriptions in the previous embodiments of the present disclosure, which will not be repeated here.

In this way, the network device may instruct the terminal to perform synchronization according to the preset synchronization bit sequence.

Fig. 12 is a flowchart of a synchronization method according to an illustrative embodiment. As shown in Fig. 12, the method may include the following steps.

In step S1201, the network device sends a wake-up message according to a first time domain pattern.

In some embodiments, the wake-up message may include synchronization information, and the synchronization information may be used to instruct the terminal to perform synchronization.

In other embodiments, the wake-up message may include the above synchronization information and data information.

In some embodiments, the first time domain pattern may include a start symbol and a time domain length corresponding to the wake-up message, and the network device may send the wake-up message according to the start symbol and the time domain length.

In other embodiments, the first time domain pattern may include a start symbol, a time domain length and a time domain period corresponding to the wake-up message, and the network device may periodically send the wake-up message according to the start symbol, the time domain length and the time domain period in the first time domain pattern.

In some embodiments, the first time domain pattern may include a start symbol and an end symbol corresponding to the wake-up message, and the network device may send the wake-up message according to the start symbol and the end symbol in the first time domain pattern.

In some embodiments, the first time domain pattern may include a start symbol, an end symbol and a time domain period corresponding to the wake-up message, and the network device may periodically send the wake-up message according to the start symbol, the end symbol and the time domain period in the first time domain pattern.

It should be noted that the first time domain pattern may also be called a first time domain plot. For a detailed description of the first time domain pattern, reference may be made to the descriptions in the previous embodiments of the present disclosure, which is not repeated here.

In this way, the network device may send the wake-up message according to the first time domain pattern, and the terminal may also receive the wake-up message according to the first time domain pattern.

Fig. 13 is a flowchart of a synchronization method according to an illustrative embodiment. As shown in Fig. 13, the method may include the following steps.

In step S1301, the network device sends a wake-up message through a first time domain resource set.

In some embodiments, the wake-up message may include synchronization information, and the first time domain resource set may include a first time domain resource subset for carrying the synchronization information. A numeric count of resources in the first time domain resource subset is less than or equal to a numeric count of resources in the first time domain resource set.

In other embodiments, the wake-up message may further include data information, and the first time domain resource set further includes a second time domain resource subset for carrying the data information. A sum of a numeric count of resources in the second time domain resource subset and the numeric count of resources in the first time domain resource subset is less than or equal to the numeric count of resources in the first time domain resource set.

In some embodiments, the terminal may also receive the wake-up message sent by the network device through the first time domain resource set.

In this way, the network device may send the wake-up message through the first time domain resource set, and the terminal may also receive the wake-up message through the first time domain resource set.

Fig. 14 is a flowchart of a synchronization method according to an illustrative embodiment. As shown in Fig. 14, the method may include the following steps.

In step S1401, the network device sends a wake-up message through a first frequency domain resource set.

In some embodiments, the wake-up message may include synchronization information, and the first frequency domain resource set may include a first frequency domain resource subset for carrying the synchronization information. A numeric count of resources in the first frequency domain resource subset is less than or equal to a numeric count of resources in the first frequency domain resource set.

In other embodiments, the wake-up message may further include data information, and the first frequency domain resource set further includes a second frequency domain resource subset for carrying the data information. A numeric count of resources in the second frequency domain resource subset may be less than or equal to the numeric count of resources in the first frequency domain resource set.

In this way, the network device may send the wake-up message through the first frequency domain resource set, and the terminal may also receive the wake-up message through the first frequency domain resource set.

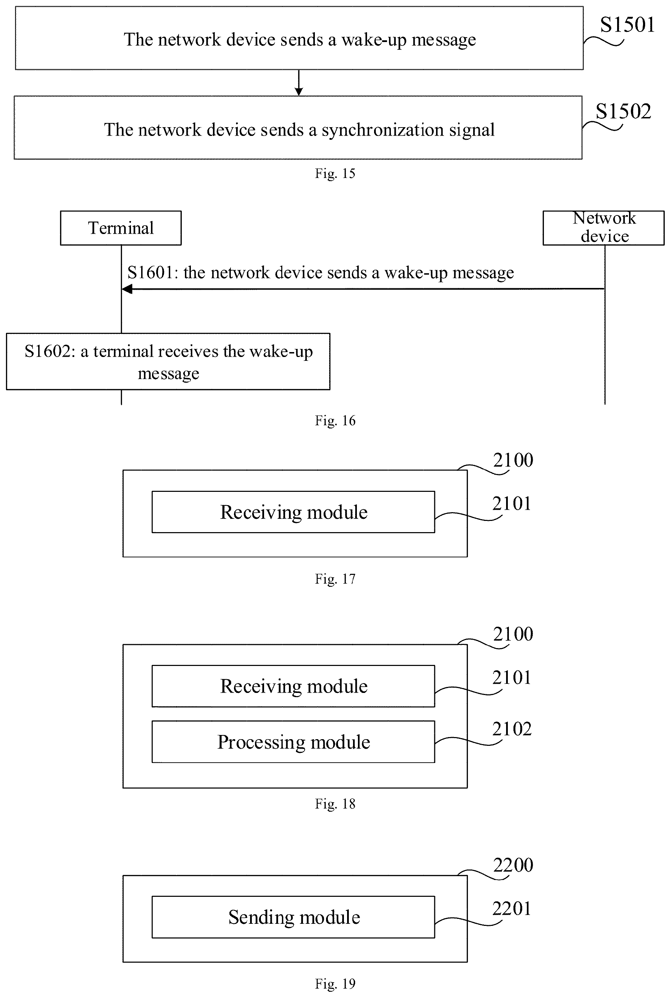

Fig. 15 is a flowchart of a synchronization method according to an illustrative embodiment. As shown in Fig. 15, the method may include the following steps.

In step S1501, the network device sends a wake-up message.

The wake-up message may include synchronization information. The synchronization information may be used to instruct the terminal to perform synchronization.

It should be noted that the way in which the network device sends the wake-up message may refer to the relevant descriptions in the aforementioned embodiments of the present disclosure, which is not repeated here.

In step S 1502, the network device sends a synchronization signal.

In some embodiments, the synchronization signal may include at least one of a primary synchronization signal (PSS), a secondary synchronization signal (SSS) and a resynchronization signal (RSS).

In some embodiments, the synchronization signal may include an SSB.

Both the wake-up message and the synchronization signal may include synchronization information, and the synchronization information in the wake-up message and the synchronization information in the synchronization signal may be the same or different.

In some embodiments, the wake-up message may include first synchronization information, and the synchronization signal may include second synchronization information. The first synchronization information may be part of synchronization information required by the terminal for synchronization, and the second synchronization information may be another part of synchronization information required by the terminal for synchronization. The terminal may perform synchronization according to the first synchronization information in the wake-up message and the second synchronization information in the synchronization signal. For example, the terminal may complete synchronization according to the first synchronization information and the second synchronization information.

In some embodiments, the first synchronization information in the wake-up message may include at least one of a physical layer cell identifier group NID1 and an intra-group identifier NID2, and the second synchronization information in the synchronization signal may also include at least one of a physical layer cell identifier group NID1 and an intra-group identifier NID2.

It should also be noted that this embodiment may be combined with the aforementioned embodiments or implementations of the present disclosure and various alternatives thereof, without contradiction, and the specific implementations of the above steps in this embodiment may also refer to the descriptions in the aforementioned embodiments of the present disclosure, which is not repeated here.

In this way, the network device may instruct the terminal to perform synchronization according to the wake-up message and the synchronization signal.

In some embodiments of the present disclosure, the network device may send the wake-up message and the synchronization signal according to a first time interval, and the first time interval may include any one of:

a time interval between an initial symbol of the wake-up message and an initial symbol of the synchronization signal;
a time interval between the initial symbol of the wake-up message and a final symbol of the synchronization signal;
a time interval between a final symbol of the wake-up message and the initial symbol of the synchronization signal; and
a time interval between the final symbol of the wake-up message and the final symbol of the synchronization signal.

It should be noted that the initial symbol of the wake-up message may be a first symbol of the wake-up message that the network device sends, and the final symbol of the wake-up message may be a last symbol of the wake-up message that the network device sends. Similarly, the initial symbol of the synchronization signal may be a first symbol of the synchronization signal that the network device sends, and the final symbol of the synchronization signal may be a last symbol of the synchronization signal that the network device sends.

In some embodiments, the first time interval may include L time units, and the time unit may be a symbol, a time slot, a subframe, a radio frame or a millisecond.

In some embodiments, the first time interval may be a time agreed by the protocol, and both the terminal and the network device take the time agreed by the protocol as the first time interval.

In other embodiments, the first time interval may be pre-configured by the network device and sent to the terminal.

In some embodiments, a moment when the network device sends the wake-up message and a moment when the network device sends the synchronization signal are separated by the first time interval.

In some embodiments of the present disclosure, the network device may send the wake-up message and the synchronization signal in the same time period, and the time period may include any one of:

at least one symbol, for example, P1 symbols, in which P1 may be any positive integer;
at least one time slot, for example, P2 time slots, in which P2 may also be any positive integer;
at least one subframe, for example, P3 subframes, in which P3 may also be any positive integer; and
at least one radio frame, for example, P4 radio frames, in which P4 may also be any positive integer.

In other embodiments, the time period may also be any time unit, such as P5 milliseconds, and P5 may also be any positive integer. For example, the time period may be 10 milliseconds or 20 milliseconds.

In some embodiments, the time period may be a period agreed by the protocol, and both the terminal and the network device take the period agreed by the protocol as the time period.

In other embodiments, the time period may be pre-configured by the network device and sent to the terminal.

It should be noted that in the same time period, the network device may send one wake-up message and one synchronization signal, or one wake-up message and a plurality of synchronization signals, or a plurality of wake-up messages and one synchronization signal, or a plurality of wake-up messages and a plurality of synchronization signals, which is not limited by the present disclosure.

Fig. 16 is a flowchart of a synchronization method according to an illustrative embodiment. As shown in Fig. 16, the method may include the following steps.

In step S1601, a network device sends a wake-up message.

In some embodiments, the wake-up message may include synchronization information.

In other embodiments, the wake-up message may include synchronization information and data information.

The wake-up message may also be called a wake-up signal (WUS). For the wake-up message and the specific way for the terminal to synchronize with the network device by using the synchronization information in the wake-up message, reference may be made to the descriptions in the previous embodiments of the present disclosure, which is not repeated here.

In step S1602, a terminal receives the wake-up message.

In some embodiment, that terminal may acquire the synchronization information in the wake-up message.

In other embodiment, the terminal may acquire the synchronization information and the data information in the wake-up message.

In some embodiments, the terminal may synchronize with the network device according to the synchronization information.

In an implementation, the terminal may complete synchronization according to the synchronization information in the wake-up message.

In another implementation, the terminal may complete synchronization according to a synchronization signal (such as a PSS and/or an SSS) and the synchronization information in the wake-up message.

It should be noted that this embodiment may be combined with the aforementioned embodiments or implementations of the present disclosure and various alternatives thereof, without contradiction, and the specific implementations of the above steps in this embodiment may also refer to the descriptions in the aforementioned embodiments of the present disclosure, which is not repeated here.

By adopting the above method, the network device sends the wake-up message, the terminal receives the wake-up message, and the wake-up message includes the synchronization information. In this way, the terminal may synchronize with the network device based on the synchronization information, thus reducing the time for synchronization between the terminal and the network device.

In an illustrative embodiment, the present disclosure also provides a communication system, which may include a terminal and a network device, the terminal may perform the synchronization method involving the terminal in the aforementioned embodiments of the present disclosure. In addition, the network device may perform the synchronization method involving the network device in the above embodiments.

Fig. 17 is a block diagram of a terminal 2100 according to an illustrative embodiment. As shown in Fig. 17, the terminal 2100 may include:
a receiving module 2101 configured to receive a wake-up message sent by a network device, in which the wake-up message includes synchronization information, and the synchronization information is used to instruct the terminal to perform synchronization.

In some embodiments, the synchronization information includes at least one of:

first information for determining a cell identifier; and
second information for determining a cell group identifier.

In some embodiments, the synchronization information is information generated based on a synchronization sequence, and the synchronization sequence includes any one of an M sequence, a gold sequence and a ZC sequence.

In some embodiments, the synchronization information includes a preset synchronization bit sequence for instructing the terminal to synchronize with the network device.

In some embodiments, the preset synchronization bit sequence is a sequence generated according to a preset modulation mode, and the preset modulation mode includes a multi-carrier on-off keying (MC-OOK) modulation mode or an amplitude shift keying (ASK) modulation mode.

Fig. 18 is a block diagram of a terminal 2100 according to an illustrative embodiment. As shown in Fig. 18, the receiving module 2101 is configured to receive the wake-up message sent by the network device through a first time domain resource set; and the terminal further includes a processing module 2102 configured to acquire the synchronization information in the wake-up message through a first time domain resource subset in the first time domain resource set. A numeric count of resources in the first time domain resource subset is less than or equal to a numeric count of resources in the first time domain resource set.

In some embodiments, the wake-up message further includes data information, and the processing module 2102 is further configured to acquire the data information through a second time domain resource subset in the first time domain resource set. The second time domain resource subset is different from the first time domain resource subset, and a sum of a numeric count of resources in the second time domain resource subset and the numeric count of resources in the first time domain resource subset is less than or equal to the numeric count of resources in the first time domain resource set.

In some embodiments, the receiving module 2101 is configured to receive the wake-up message sent by the network device through a first frequency domain resource set.

The processing module 2102 is configured to acquire the synchronization information in the wake-up message through a first frequency domain resource subset in the first frequency domain resource set. A numeric count of resources in the first frequency domain resource subset is less than or equal to a numeric count of resources in the first frequency domain resource set.

In some embodiments, the wake-up message further includes data information, and the processing module 2102 is further configured to acquire the data information through a second frequency domain resource subset in the first frequency domain resource set. The second frequency domain resource subset is different from the first frequency domain resource subset, and a numeric count of resources in the second frequency domain resource subset is less than or equal to the numeric count of resources in the first frequency domain resource set.

In some embodiments, the synchronization information is carried in a synchronization part of the wake-up message.

In some embodiments, the wake-up message further includes data information, and the data information is carried in a data part of the wake-up message.

In some embodiments, the processing module 2102 is further configured to synchronize with the network device according to the wake-up message; or, synchronize with the network device according to the wake-up message and a synchronization signal. The synchronization signal includes at least one of a primary synchronization signal (PSS), a secondary synchronization signal (SSS) and a resynchronization signal (RSS).

In some embodiments, the receiving module 2101 is further configured to receive the wake-up message and the synchronization signal according to a first time interval, and the first time interval includes any one of:

a time interval between an initial symbol of the wake-up message and an initial symbol of the synchronization signal;

a time interval between the initial symbol of the wake-up message and a final symbol of the synchronization signal;

a time interval between a final symbol of the wake-up message and the initial symbol of the synchronization signal; and

a time interval between the final symbol of the wake-up message and the final symbol of the synchronization signal.

In some embodiments, the receiving module 2101 is configured to receive the wake-up message and the synchronization signal within one time period, and the time period includes any one of:

at least one symbol;
at least one time slot;
at least one subframe; and
at least one radio frame.

In some embodiments, the receiving module 2101 is configured to receive the wake-up message sent by the network device according to a first time domain pattern, and the first time domain pattern includes any one of

a start symbol and a time domain length corresponding to the wake-up message;
a start symbol and an end symbol corresponding to the wake-up message;
a start symbol, a time domain length and a time domain period corresponding to the wake-up message; and
a start symbol, an end symbol and a time domain period corresponding to the wake-up message.

Fig. 19 is a block diagram of a network device 2200 according to an illustrative embodiment. As shown in Fig. 19, the network device 2200 may include: a sending module 2201 configured to send a wake-up message. The wake-up message includes synchronization information, and the synchronization information is used to instruct the terminal to perform synchronization.

In some embodiments, the synchronization information includes at least one of:

first information for determining a cell identifier; and
second information for determining a cell group identifier.

In some embodiments, the synchronization information is information generated based on a synchronization sequence, and the synchronization sequence includes any one of an M sequence, a gold sequence and a ZC sequence.

In some embodiments, the synchronization information includes a preset synchronization bit sequence for instructing the terminal to perform synchronization.

In some embodiments, the preset synchronization bit sequence is a sequence generated according to a preset modulation mode, and the preset modulation mode includes a multi-carrier on-off keying (MC-OOK) modulation mode or an amplitude shift keying (ASK) modulation mode.

In some embodiments, the sending module 2201 is configured to send the wake-up message through a first time domain resource set. The first time domain resource set includes a first time domain resource subset for carrying the synchronization information, and a numeric count of resources in the first time domain resource subset is less than or equal to a numeric count of resources in the first time domain resource set.

In some embodiments, the wake-up message further includes data information, and the first time domain resource set further includes a second time domain resource subset for carrying the data information. The second time domain resource subset is different from the first time domain resource subset, and a sum of a numeric count of resources in the second time domain resource subset and the numeric count of resources in the first time domain resource subset is less than or equal to the numeric count of resources in the first time domain resource set.

In some embodiments, the sending module 2201 is configured to send the wake-up message through a first frequency domain resource set. The first frequency domain resource set includes a first frequency domain resource subset for carrying the synchronization information, and a numeric count of resources in the first frequency domain resource subset is less than or equal to a numeric count of resources in the first frequency domain resource set.

In some embodiments, the wake-up message further includes data information, and the first frequency domain resource set further includes a second frequency domain resource subset for carrying the data information. A numeric count of resources in the second frequency domain resource subset is less than or equal to the numeric count of resources in the first frequency domain resource set.

In some embodiments, the sending module 2201 is configured to send the wake-up message and a synchronization signal according to a first time interval, and the first time interval includes any one of:

a time interval between an initial symbol of the wake-up message and an initial symbol of the synchronization signal;
a time interval between the initial symbol of the wake-up message and a final symbol of the synchronization signal;
a time interval between a final symbol of the wake-up message and the initial symbol of the synchronization signal; and

a time interval between the final symbol of the wake-up message and the final symbol of the synchronization signal.

In some embodiments, the sending module 2201 is configured to send the wake-up message and the synchronization signal within one time period, and the time period includes any one of:

at least one symbol;
at least one time slot;
at least one subframe; and
at least one radio frame.

In some embodiments, the sending module 2201 is configured to send the wake-up message according to a first time domain pattern, and the first time domain pattern includes any one of:

a start symbol and a time domain length corresponding to the wake-up message;
a start symbol and an end symbol corresponding to the wake-up message;
a start symbol, a time domain length and a time domain period corresponding to the wake-up message; and
a start symbol, an end symbol and a time domain period corresponding to the wake-up message.

With regard to the terminal or the network device in the above embodiments, the specific way in which each module performs operations has been described in detail in the embodiments of the methods, which is not be described in detail here.

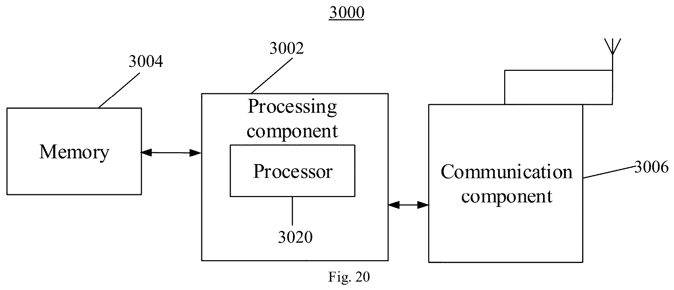

Fig. 20 is a block diagram of a communication device according to an illustrative embodiment. A communication device 3000 may be the terminal or the network device in the communication system shown in Fig. 1.

Referring to Fig. 20, the communication device 3000 may include one or more of a processing component 3002, a memory 3004, and a communication component 3006.

The processing component 3002 may be used to control the overall operation of the communication device 3000, such as operations associated with display, telephone call, data communication, camera operation and recording operation. The processing component 3002 may include one or more processors 3020 to execute instructions to complete all or part of the steps of the synchronization methods described above. In addition, the processing component 3002 may include one or more modules to facilitate the interaction between the processing component 3002 and other components. For example, the processing component 3002 may include a multimedia module to facilitate interaction between the multimedia component and the processing component 3002.

The memory 3004 is configured to store various types of data to support operations in the communication device 3000. Examples of these data include instructions for any application or method operating in the communication device 3000, contact data, phone book data, messages, pictures, videos, and the like. The memory 3004 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 3006 is configured to facilitate wired or wireless communication between the communication device 3000 and other devices. The communication device 3000 may access a wireless network based on communication standards, such as Wi-Fi, 2G, 3G, 4G, 5G, 6G, NB-IOT, eMTC, etc., or their combination. In an illustrative embodiment, the communication component 3006 receives a broadcast signal or broadcast related information from an external broadcast management system via a broadcast channel. In an illustrative embodiment, the communication component 3006 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the communication device 3000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above synchronization methods.

The communication device 3000 may be an independent electronic device or a part of an independent electronic device. For example, in an embodiment, the electronic device may be an integrated circuit (IC) or a chip, and the integrated circuit may be an IC or a set of multiple ICs. The chip may include, but is not limited to, the following types: graphics processing unit (GPU), central processing unit (CPU), field programmable gate array (FPGA), digital signal processor (DSP), application specific integrated circuit (ASIC), system on chip (SoC), etc. The integrated circuit or chip may be used to execute executable instructions (or codes) to realize the synchronization methods. The executable instructions may be stored in the integrated circuit or chip, and may also be obtained from other apparatuses or devices. For example, the integrated circuit or chip includes a processor, a memory, and an interface for communicating with other devices. The executable instructions may be stored in the processor, and when the executable instruction is executed by the processor, the synchronization method is realized. Alternatively, the integrated circuit or chip may receive the executable instructions through the interface and transmit them to the processor for execution, so as to realize the above synchronization method.

In an illustrative embodiment, the present disclosure also provides a computer-readable storage medium on which computer program instructions are stored, which, when executed by a processor, realize the steps of the synchronization method provided by the present disclosure. For example, the computer-readable storage medium may be a non-transitory computer-readable storage medium including instructions, for example, it may be the above memory 3004 including instructions, and the instructions may be executed by the processor 3020 of the communication device 3000 to complete the above synchronization method. For example, the non-transitory computer-readable storage medium may be a ROM, a random access memory (RAM), a CD-ROM, a magnetic tape, a floppy disk, an optical data storage device, etc.

In another illustrative embodiment, there is also provided a computer program product, which includes a computer program executable by a programmable device, and the computer program has a code portion for performing the above synchronization method when executed by the programmable device.

Other embodiments of the present disclosure will easily occur to those skilled in the art after they consider the specification and practice the present disclosure. The present disclosure is intended to cover any variations, uses or adaptations of the present disclosure, which follow the general principles of the present disclosure and include common sense or common technical means in the related art that are not disclosed in the present disclosure. The specification and examples are to be regarded as illustrative only, with the true scope and spirit of the present disclosure being indicated by the following claims.

It should be understood that the present disclosure is not limited to the precise structure described above and shown in the drawings, and various modifications and changes may be made without departing from the scope of the present disclosure. The scope of the present disclosure is limited only by the appended claims.

## Claims

1. A synchronization method, performed by a terminal, comprising:

   receiving a wake-up message sent by a network device, wherein the wake-up message comprises synchronization information, and the synchronization information is configured to instruct the terminal to perform synchronization.

2. The method according to claim 1, wherein the synchronization information comprises at least one of:

first information for determining a cell identifier; or
second information for determining a cell group identifier.

3. The method according to claim 1, wherein the synchronization information is information generated based on a synchronization sequence, and the synchronization sequence comprises any one of an m sequence, a gold sequence and a ZC sequence.

4. The method according to claim 1, wherein the synchronization information comprises a preset synchronization bit sequence for instructing the terminal to synchronize with the network device, wherein the preset synchronization bit sequence is a sequence generated according to a preset modulation mode, and the preset modulation mode comprises a multi-carrier on-off keying (MC-OOK) modulation mode or an amplitude shift keying (ASK) modulation mode.

5. The method according to claim 1, wherein receiving the wake-up message sent by the network device comprises:

receiving the wake-up message sent by the network device through a first time domain resource set,
wherein the method further comprises:
acquiring the synchronization information in the wake-up message through a first time domain resource subset in the first time domain resource set, wherein a numeric count of resources in the first time domain resource subset is less than or equal to a numeric count of resources in the first time domain resource set.

6. The method according to claim 5, wherein the wake-up message further comprises data information, and the method further comprises:
acquiring the data information through a second time domain resource subset in the first time domain resource set, wherein a sum of a numeric count of resources in the second time domain resource subset and the numeric count of resources in the first time domain resource subset is less than or equal to the numeric count of resources in the first time domain resource set.

7. The method according to claim 1, wherein receiving the wake-up message sent by the network device comprises:

receiving the wake-up message sent by the network device through a first frequency domain resource set,
wherein the method further comprises:
acquiring the synchronization information in the wake-up message through a first frequency domain resource subset in the first frequency domain resource set, wherein a numeric count of resources in the first frequency domain resource subset is less than or equal to a numeric count of resources in the first frequency domain resource set.

8. The method according to claim 7, wherein the wake-up message further comprises data information, and the method further comprises:
acquiring the data information through a second frequency domain resource subset in the first frequency domain resource set, wherein a numeric count of resources in the second frequency domain resource subset is less than or equal to the numeric count of resources in the first frequency domain resource set.

9. The method according to claim 1, wherein the synchronization information is carried in a synchronization part of the wake-up message.

10. The method according to claim 9, wherein the wake-up message further comprises data information, and the data information is carried in a data part of the wake-up message.

11. The method according to claim 1, further comprising:

synchronizing with the network device according to the wake-up message; or,
synchronizing with the network device according to the wake-up message and a synchronization signal, wherein the synchronization signal comprises at least one of a primary synchronization signal (PSS), a secondary synchronization signal (SSS) and a resynchronization signal (RSS).

12. The method according to claim 11, further comprising:
receiving the wake-up message and the synchronization signal according to a first time interval, wherein the first time interval comprises any one of:

a time interval between an initial symbol of the wake-up message and an initial symbol of the synchronization signal;
a time interval between the initial symbol of the wake-up message and a final symbol of the synchronization signal;
a time interval between a final symbol of the wake-up message and the initial symbol of the synchronization signal; and
a time interval between the final symbol of the wake-up message and the final symbol of the synchronization signal.

13. The method according to claim 11, further comprising:
receiving the wake-up message and the synchronization signal within one time period, wherein the time period comprises any one of:

at least one symbol;
at least one time slot;
at least one subframe; and
at least one radio frame.

14. The method according to any one of claims 1-13, wherein receiving the wake-up message sent by the network device comprises:
receiving the wake-up message sent by the network device according to a first time domain pattern, wherein the first time domain pattern comprises any one of:

a start symbol and a time domain length corresponding to the wake-up message;
a start symbol and an end symbol corresponding to the wake-up message;
a start symbol, a time domain length and a time domain period corresponding to the wake-up message; and
a start symbol, an end symbol and a time domain period corresponding to the wake-up message.

15. A synchronization method, performed by a network device, comprising:
sending a wake-up message, wherein the wake-up message comprises synchronization information, and the synchronization information is configured to instruct a terminal to perform synchronization.

16. The method according to claim 15, wherein the synchronization information comprises at least one of:

first information for determining a cell identifier; or
second information for determining a cell group identifier.

17. The method according to claim 15, wherein the synchronization information is information generated based on a synchronization sequence, and the synchronization sequence comprises any one of an M sequence, a gold sequence and a ZC sequence.

18. The method according to claim 15, wherein the synchronization information comprises a preset synchronization bit sequence for instructing the terminal to perform synchronization, wherein the preset synchronization bit sequence is a sequence generated according to a preset modulation mode, and the preset modulation mode comprises a multi-carrier on-off keying (MC-OOK) modulation mode or an amplitude shift keying (ASK) modulation mode.

19. The method according to claim 15, wherein sending the wake-up message comprises:
sending the wake-up message through a first time domain resource set, wherein the first time domain resource set comprises a first time domain resource subset, the first time domain resource subset is configured to carry the synchronization information, and a numeric count of resources in the first time domain resource subset is less than or equal to a numeric count of resources in the first time domain resource set.

20. The method according to claim 19, wherein the wake-up message further comprises data information, the first time domain resource set further comprises a second time domain resource subset, and the second time domain resource subset is configured to carry the data information; and
the second time domain resource subset is different from the first time domain resource subset, and a sum of a numeric count of resources in the second time domain resource subset and the numeric count of resources in the first time domain resource subset is less than or equal to the numeric count of resources in the first time domain resource set.

21. The method according to claim 15, wherein sending the wake-up message comprises:
sending the wake-up message through a first frequency domain resource set, wherein the first frequency domain resource set comprises a first frequency domain resource subset, and the first frequency domain resource subset is configured to carry the synchronization information, and a numeric count of resources in the first frequency domain resource subset is less than or equal to a numeric count of resources in the first frequency domain resource set.

22. The method according to claim 21, wherein the wake-up message further comprises data information, the first frequency domain resource set further comprises a second frequency domain resource subset, and the second frequency domain resource subset is configured to carry the data information; and
a numeric count of resources in the second frequency domain resource subset is less than or equal to the numeric count of resources in the first frequency domain resource set.

23. The method according to claim 15, wherein sending the wake-up message comprises:
    sending the wake-up message and a synchronization signal according to a first time interval, wherein the first time interval comprises any one of:

    a time interval between an initial symbol of the wake-up message and an initial symbol of the synchronization signal;
    a time interval between the initial symbol of the wake-up message and a final symbol of the synchronization signal;
    a time interval between a final symbol of the wake-up message and the initial symbol of the synchronization signal; and
    a time interval between the final symbol of the wake-up message and the final symbol of the synchronization signal.

24. The method according to claim 15, wherein sending the wake-up message comprises:
    sending the wake-up message and a synchronization signal within one time period, wherein the time period comprises any one of:

    at least one symbol;
    at least one time slot;
    at least one subframe; and
    at least one radio frame.

25. The method according to any one of claims 15-24, wherein sending the wake-up message comprises:
    sending the wake-up message according to a first time domain pattern, wherein the first time domain pattern comprises any one of:

    a start symbol and a time domain length corresponding to the wake-up message;
    a start symbol and an end symbol corresponding to the wake-up message;
    a start symbol, a time domain length and a time domain period corresponding to the wake-up message; and
    a start symbol, an end symbol and a time domain period corresponding to the wake-up message.

26. A terminal, comprising:
    a receiving module configured to receive a wake-up message sent by a network device, wherein the wake-up message comprises synchronization information, and the synchronization information is configured to instruct the terminal to perform synchronization.

27. A network device, comprising:

a sending module configured to send a wake-up message, wherein the wake-up message comprises synchronization information, and the synchronization information is configured to instruct a terminal to perform synchronization.

28. A communication device, comprising:

    a processor; and
    a memory configured to store instructions executable by the processor,
    wherein the processor is configured to perform the steps of the method according to any one of claims 1-14, or the processor is configured to perform the steps of the method according to any one of claims 15-25.

29. A communication system, comprising:

    a terminal configured to perform the method according to any one of claims 1-14; and
    a network device configured to perform the method according to any one of claims 15-25.

30. A computer-readable storage medium, configured to store computer program instructions, which, when executed by a processor, realize the steps of the method according to any one of claims 1-14, or realize the steps of the method according to any one of claims 15-25.

Fig. 1

The terminal receives a wake-up message sent by a network device — S201

Fig. 2

The terminal receives a wake-up message sent by a network device according to a first time domain pattern — S301

Fig. 3

The terminal receives a wake-up message sent by a network device through a first time domain resource set — S401

The terminal obtains synchronization information in the wake-up message through a first time domain resource subset in the first time domain resource set — S402

Fig. 4

The terminal receives a wake-up message sent by a network device through a first frequency domain resource set — S501

The terminal acquires synchronization information in the wake-up message through a first frequency domain resource subset in the first frequency domain resource set — S502

Fig. 5

| The terminal receives a wake-up message sent by a network device | S601 |

↓

| The terminal synchronizes with the network device according to the wake-up message | S602 |

Fig. 6

| The terminal receives a wake-up message sent by a network device | S701 |

↓

| The terminal receives a synchronization signal sent by the network device | S702 |

↓

| The terminal synchronizes with the network device according to the wake-up message and the synchronization signal | S703 |

Fig. 7

| Wake-up message | Synchro nization signal | Wake-up message | Synchro nization signal | Wake-up message | Synchro nization signal |

←—Time period—→|←—Time period—→|←—Time period—→

Fig. 8

| Wake-up message | | | Synchron ization signal | Synchron ization signal | Synchron ization signal |

←Time period→|←Time period→|←Time period→|←Time period→|←Time period→|←Time period→

Fig. 9

| Synchronization information | Synchronization information | Synchronization information | Synchronization information | Synchronization information | Synchronization information | Synchronization information | Synchronization information | Synchronization information | Synchronization information | Data information | Data information | Data information | Data information |
|---|---|---|---|---|---|---|---|---|---|---|---|---|---|

| Synchronization information | Data informaiton | | Synchronization information | Data information |
|---|---|---|---|---|

Wake-up signal
monitoring window

Fig. 10

| The network device sends a wake-up message | S1101 |
|---|---|

Fig. 11

| The network device sends a wake-up message according to a first time domain pattern | S1201 |
|---|---|

Fig. 12

| The network device sends a wake-up message through a first time domain resource set | S1301 |
|---|---|

Fig. 13

| The network device sends a wake-up message through a first frequency domain resource set | S1401 |
|---|---|

Fig. 14

| The network device sends a wake-up message | S1501 |

| The network device sends a synchronization signal | S1502 |

Fig. 15

| Terminal |                                                        | Network device |

S1601: the network device sends a wake-up message

| S1602: a terminal receives the wake-up message |

Fig. 16

2100

| Receiving module | 2101 |

Fig. 17

2100

| Receiving module | 2101 |
| Processing module | 2102 |

Fig. 18

2200

| Sending module | 2201 |

Fig. 19

3000

3004

3002

Memory

Processing
component

Processor

3020

Communication
component

3006

Fig. 20

**EP 4 651 571 A1**

## INTERNATIONAL SEARCH REPORT

| International application No. |
|---|
| **PCT/CN2023/071972** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

IPC: H04W,H04L,H04B

Documentation searched other than minimum documentation to the extent that such documents are included in the fields searched

Electronic data base consulted during the international search (name of data base and, where practicable, search terms used)

CNKI, CNTXT, ENTXTC, 3GPP: 唤醒, 同步, 序列, 小区, 时域, 频域, 终端, 符号, wake up, WUS, synchron+, sequence, cell, time, frequency, terminal, UE, symbol

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107969029 A (HUAWEI TECHNOLOGIES CO., LTD.) 27 April 2018 (2018-04-27) description, paragraphs [0046]-[0166], and figures 2-5 | 1-30 |
| X | CN 108668342 A (HUAWEI TECHNOLOGIES CO., LTD.) 16 October 2018 (2018-10-16) description, paragraphs [0078]-[0172], and figures 2 and 3 | 1-30 |
| X | CN 113873625 A (BEIJING XIAOMI MOBILE SOFTWARE CO., LTD.) 31 December 2021 (2021-12-31) description, paragraphs [0097]-[0195], and figures 1 and 4-10 | 1-30 |
| A | WO 2019055418 A1 (QUALCOMM INCORPORATED) 21 March 2019 (2019-03-21) entire document | 1-30 |
| A | HUAWEI et al. "R1-1805979 On wake-up signal for eFeMTC" *3GPP TSG RAN WG1 MEETING #93*, 25 May 2018 (2018-05-25), entire document | 1-30 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2023** | **20 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 651 571 A1

**INTERNATIONAL SEARCH REPORT**
Information on patent family members

International application No.

**PCT/CN2023/071972**

| Patent document cited in search report | | | Publication date (day/month/year) | Patent family member(s) | | | Publication date (day/month/year) |
|---|---|---|---|---|---|---|---|
| CN | 107969029 | A | 27 April 2018 | WO | 2018072692 | A1 | 26 April 2018 |
| | | | | EP | 3522621 | A1 | 07 August 2019 |
| CN | 108668342 | A | 16 October 2018 | WO | 2018177266 | A1 | 04 October 2018 |
| CN | 113873625 | A | 31 December 2021 | None | | | |
| WO | 2019055418 | A1 | 21 March 2019 | TW | 201922005 | A | 01 June 2019 |
| | | | | WO | 2019055417 | A1 | 21 March 2019 |
| | | | | KR | 20200052887 | A | 15 May 2020 |
| | | | | US | 2019090190 | A1 | 21 March 2019 |
| | | | | JP | 2020535687 | A | 03 December 2020 |
| | | | | EP | 3682679 | A1 | 22 July 2020 |
| | | | | TW | 201921994 | A | 01 June 2019 |
| | | | | US | 2019090191 | A1 | 21 March 2019 |
| | | | | EP | 3682676 | A1 | 22 July 2020 |
| | | | | JP | 2020534729 | A | 26 November 2020 |
| | | | | KR | 20200052886 | A | 15 May 2020 |

Form PCT/ISA/210 (patent family annex) (July 2022)